Europäisches Patentamt

European Patent Office

Office européen des brevets

(11) Numéro de publication: **0 462 909 B1**

# FASCICULE DE BREVET EUROPEEN

(45) Date de publication de fascicule du brevet: **22.03.95** (51) Int. Cl.6: **B60L 5/20**

(21) Numéro de dépôt: **91420201.5**

(22) Date de dépôt: **18.06.91**

(54) **Bande de frottement en carbone avec détecteur d'avaries.**

(30) Priorité: **20.06.90 FR 9007974**

(43) Date de publication de la demande:
**27.12.91 Bulletin 91/52**

(45) Mention de la délivrance du brevet:
**22.03.95 Bulletin 95/12**

(84) Etats contractants désignés:
**AT BE CH DE DK ES FR GB GR IT LI LU NL SE**

(56) Documents cités:
**EP-A- 0 078 159**
**GB-A- 1 374 972**

(73) Titulaire: **LE CARBONE LORRAINE**
**Tour Manhattan - La Défense 2,**
**5-6, place de l'Iris,**
**F-92400 Courbevoie (FR)**

(72) Inventeur: **Odot, Patrick**
**5, rue Ferdinand Buisson**
**F-34120 Pezenas (FR)**

(74) Mandataire: **Vanlaer, Marcel et al**
**PECHINEY**
**28, rue de Bonnel**
**F-69433 Lyon Cédex 3 (FR)**

**Description**

DOMAINE DE L'INVENTION

L'invention concerne une bande de frottement en carbone avec détection d'avaries ainsi qu'un procécé de fabrication d'une telle bande. Cette bande est utilisée pour transférer l'énergie électrique entre un moyen fixe de distribution de l'énergie, tel un cable, et un appareil mobile consommateur d'énergie, tel une voiture de traction de train, de métro, qui est muni de ladite bande de frottement.

RAPPEL DE L'ART ANTERIEUR

Le brevet anglais GB 1 374 972 décrit une bande de frottement en carbone comportant un dispositif de détection d'avaries. Selon ce dispositif, la bande de frottement est munie intérieurement d'un récipient tubulaire contenant un fluide, de sorte que, en cas d'usure excessive ou en cas de rupture de la bande de frottement, il y ait rupture du récipient tubulaire, détection de fuite du fluide et retrait du pantographe qui supporte la bande de frottement.

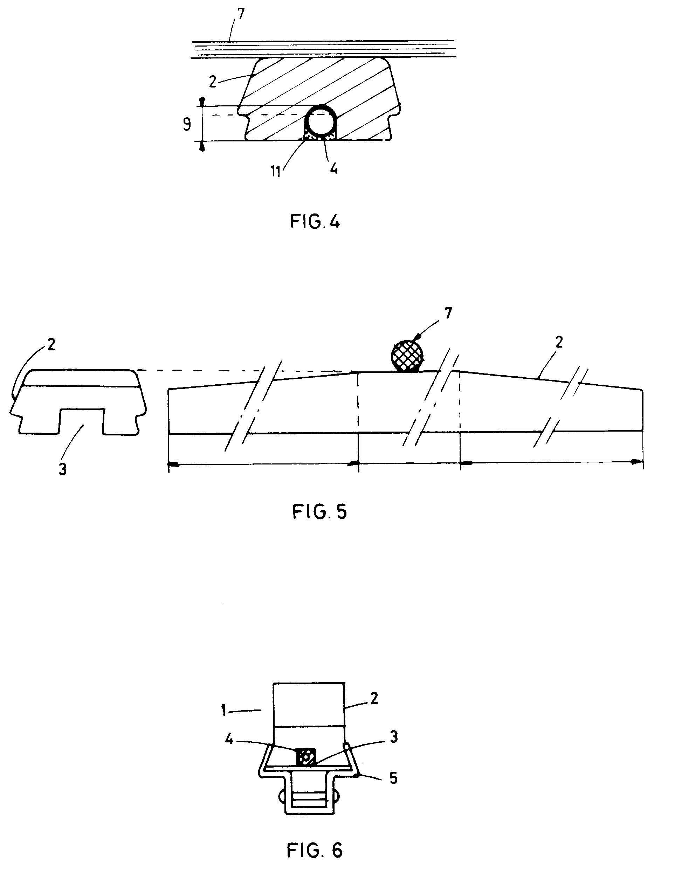

Un exemple de bande de frottement (1) est schématisé, en coupe, à la figure 6 : une rainure (3) est aménagée sur toute la longueur de la bande d'usure (2), côté étrier (5), dans laquelle un tube (4), alimenté en fluide, est collé. Selon ce brevet, le tube (4) peut être en caoutchouc silicone, en d'autres matériaux notamment plastiques tels que le PTFE pouvant résister à une température de fonctionnement de, par exemple, 200°C. Selon une autre modalité, le récipient tubulaire peut être constitué par la rainure elle-même dont la surface ouverte est rendue étanche à l'aide d'un produit adhésif tel qu'un caoutchouc synthétique.

Ce brevet a fait l'objet d'une amélioration décrite dans le brevet européen EP 0 078 159 A1. En effet, dans le brevet GB 1374 972 initial, la rupture du récipient tubulaire résulte de la rupture ou de l'usure excessive de la bande d'usure. L'amélioration prévoit un récipient tubulaire dilatable contenant un fluide sous pression et sensible aux défauts, défauts de construction, de montage ou défauts tels que fissures qui naissent et se propagent avant qu'il y ait rupture. Le récipient tubulaire a une paroi mince en caoutchouc silicone qui va éclater sous la pression interne dès que cette paroi mince ne sera plus supportée localement suite à l'existence ou l'apparition d'un défaut de la bande d'usure.

POSITION DU PROBLEME

Si l'art antérieur pose clairement le problème de la détection d'usure excessive ou d'avaries des bandes d'usure, par contre, les solutions de l'art antérieur ne donnent pas entièrement satisfaction.

En effet, le brevet EP 078 159 précise les limites de l'invention initiale décrite dans le GB 1 374 972 : la détection n'a lieu qu'après rupture ou usure excessive de la bande de frottement, c'est à dire avec un risque de détérioration du pantographe et du fil caténaire.

D'autre part, le brevet EP 078 159, qui vise l'amélioration de la sensibilité de détection de défaut, propose une solution qui ne donne pas non plus entièrement satisfaction parce que la détection n'a lieu qu'à partir du moment où le récipient tubulaire en élastomère souple est localement non supporté ; or, il existe toutes sortes d'endommagements de la bande de frottement qui risquent de ne pas être détectés par cette solution puisque n'induisant pas forcément une absence de support local au niveau du récipient tubulaire. Ainsi, par exemple, il peut y avoir fissuration de la bande de frottement, suite à un choc thermique ou physique, sans altération significative du support local du récipient tubulaire et donc sans détection d'avarie. C'est la raison pour laquelle la demanderesse a recherché une autre solution à ce problème.

DESCRIPTION DE LA SOLUTION

Pour résoudre le problème posé, la demanderesse a mis au point une bande de frottement servant au transfert d'énergie électrique sur matériel roulant, constituée d'une bande d'usure, en matériau conducteur électrique à base de carbone, comportant un dispositif détecteur d'avaries de la bande d'usure avec, sur la face de la bande d'usure en contact avec un étrier servant de support, une rainure sur sensiblement toute la longueur de la bande d'usure dans laquelle est placé un tube étanche rendu solidaire avec ladite bande d'usure par encastrement et/ou par collage et contenant un fluide sous pression servant de détecteur et en communication avec une autre partie dudit dispositif détecteur, ladite bande de frottement étant caractérisée en ce que le matériau constituant le tube présente des caractéristiques mécaniques de résistance

2

EP 0 462 909 B1

mécanique et de résilience, et thermo-mécaniques voisines de celles du matériau constituant la bande d'usure et en ce que la profondeur de la rainure est supérieure à la hauteur de la machoire de l'étrier afin que le tube détecte à temps l'usure de la bande d'usure.

Par caractéristiques voisines, on entend des caractéristiques dont les valeurs numériques diffèrent au plus de 25 %.

Par endommagement, on entend principalement des fissures qui peuvent apparaître sur la bande d'usure suite à tout type de contraintes, notamment de chocs mécaniques, de chocs thermiques. Par ailleurs pour résoudre le problème posé, l'invention propose un procédé tel que spécifié dans la revendication 9.

La demanderesse, ayant testé des tubes en différents types de matériaux ainsi que différents modes d'assemblage des tubes et des bandes d'usure, a trouvé une solution au problème posé qui est à l'opposé des solutions préconisées jusqu'à présent : en effet, elle a observé que les défauts éventuels de la bande de frottement se transmettaient au tube détecteur (4) d'autant mieux que ce tube présente des propriétés mécaniques (résistance mécanique et résilience principalement) et thermomécaniques voisines de celles de la bande d'usure (2) et d'autant mieux que la liaison entre le tube détecteur et la bande de frottement ne s'oppose pas à la propagation de l'endommagement de la bande d'usure au tube détecteur.

Ainsi, la demanderesse a écarté pour manque de sensibilité aux chocs tous les tubes en matériau plastique, notamment ceux de l'art antérieur ainsi que ceux en alliage métallique.

En pratique, il est commode d'utiliser des matériaux de la même famille chimique pour obtenir les propriétés voisines selon l'invention, cependant cette adéquation des propriétés pourrait être éventuellement obtenue avec d'autres familles chimiques, de sorte que des tubes en matériau tel que des verres spéciaux ou des céramiques spéciales ne sont pas exclus du champ de l'invention.

De préférence, le tube (4) est à base de carbone et appartient à la même famille chimique que la bande d'usure (2). Il peut supporter une pression d'au moins 1 MPa (10 bar), cette pression étant généralement celle de l'air comprimé sur une locomotive.

Selon l'invention, la nuance de carbone choisie pour le tube (4) présente une résistance à l'usure au plus égale à celle de la nuance de carbone choisie pour la bande d'usure (2). En effet, il est important que le tube s'use par frottement au moins aussi facilement que la bande d'usure afin de pouvoir détecter en temps utile la limite de fonctionnement de la bande d'usure.

Les matériaux de base constituant le tube et la bande d'usure sont connus en eux-mêmes. Typiquement, on les obtient de la manière suivante :

Divers cokes sont soigneusement broyés pour obtenir des poudres dont la granulométrie varie selon la plus ou moins grande densité recherchée.

Ces poudres sont ensuite mélangées avec un liant, en général du type brai, et stockées sous forme de cylindres précomprimés. Ces cylindres sont ensuite introduits dans une presse équipée de filières diverses qui permettent l'obtention de différents profils, par exemple du type "bande d'usure" ou du type "tube". Bien sûr, il est possible d'introduire des variantes dans ces procédés, par exemple de réaliser en continu le mélange, le malaxage du coke broyé et du brai, la mise en forme par extrusion de la pâte ainsi formée à travers une filière de forme adaptée. D'une manière générale, l'invention peut mettre en oeuvre les divers procédés connus de mise en forme de pâte à base de coke broyé et de liant.Ces profilés sont ensuite rangés dans des fours de cuisson où ils sont cuits sous atmosphère neutre. Il est possible de réaliser, à ce stade ou ultérieurement, une cuisson comportant une phase de graphitation.

On obtient ainsi des profilés solides en matière carbonée cuite et légèrement poreux, à cause de la distillation d'une partie du liant. Ces profilés cuits peuvent ensuite subir divers traitements connus en eux-mêmes tels que l'imprégnation de résine, l'imprégnation métallique, traitements destinés soit à diminuer la porosité, ce qui est essentiel dans le cas du tube (4), soit à augmenter les caractéristiques mécaniques ou les propriétés électriques, soit à favoriser le glissement de manière à assurer une faible usure au frottement soit encore à imperméabiliser la bande de frottement pour la rendre insensible à l'eau ou l'humidité.

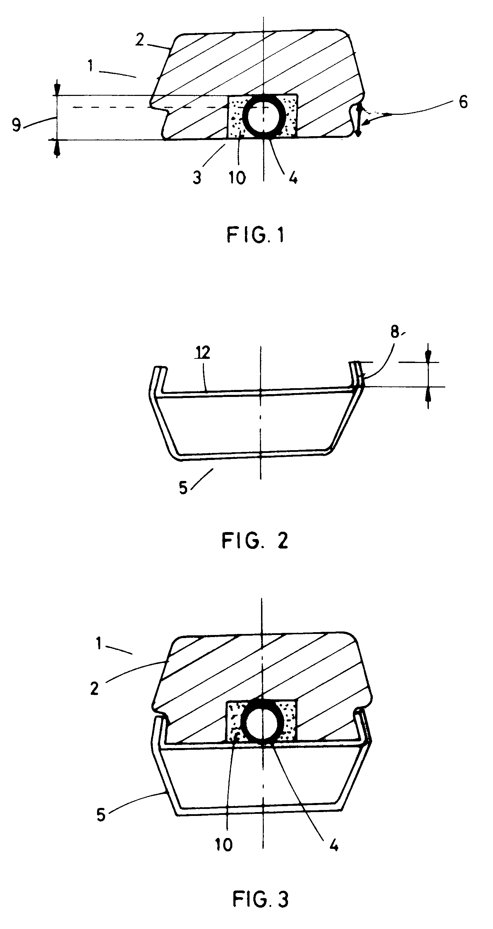

Ces profilés bruts obtenus après cuisson et traitements divers sont mis à longueur, usinés et préparés en vue de l'assemblage final du tube et de la bande d'usure. Les profilés bruts correspondant à la bande d'usure peuvent être à ce stade des barres à section quelconque ou également des barres ayant déjà pour partie des cotes définitives et présentant par exemple une section telle que celle de la figure 1 avec la rainure (3) et des retraits latéraux (6) en vue de la fixation de la bande de frottement sur l'étrier (5).

L'usinage de la bande d'usure permet d'accéder aux cotes finales de la bande de frottement et de réaliser ce qui ne l'a pas été au stade du profilé, tel le profil longitudinal comme indiqué à la figure 5. En effet, la face de la bande de frottement en contact avec l'élément distributeur d'énergie électrique, souvent un fil caténaire (7) dans le cas du transport ferroviaire, présente généralement une surface de frottement à 3 plans avec un plan central parallèle à la base de la bande de frottement et deux plans latéraux légèrement inclinés ; c'est au niveau du plan central que s'effectue pour l'essentiel le transfert d'énergie électrique et

3

c'est donc à ce niveau-là que l'épaisseur de la bande de frottement est maximum. Cependant, la surface de frottement n'est pas nécessairement constituée de plans, elle peut avoir une forme arrondie, par exemple une forme semi-elliptique aplatie.

La bande d'usure peut être constituée de plusieurs parties raccordées en biseau et assemblées par tout moyen connu, par exemple par collage par la tranche. En effet, certains traitements, par exemple une imprégnation de matériau carboné par un métal liquide, ne sont possibles à ce jour que sur des longueurs réduites de profilés qui peuvent être inférieures à celle d'une bande d'usure. Il est donc parfois nécessaire de traiter des parties de bande d'usure et de les assembler ensuite.

Selon l'invention, la rainure (3) a une hauteur au moins égale à la hauteur du retrait (6), qui est donc aussi la hauteur de la machoire (8) de l'étrier (5), ceci afin que, la bande d'usure étant usée, le fil (7) atteigne la rainure (3) et son tube associé (4) et déclenche le signal d'usure, avant que soit atteinte l'extrémité supérieure de l'étrier généralement métallique qui pourrait endommager le réseau de distribution de l'énergie électrique, par exemple le fil caténaire (7).

La forme propre de la rainure n'est pas en elle-même critique et est souvent en relation avec la forme du tube, elle peut être de section rectangulaire comme représenté à la figure 1, de section à portion semi-circulaire comme représenté à la figure 4, ou encore de section carrée, triangulaire, semi-elliptique etc...

Les dimensions du tube (4) sont adaptées à celle de la rainure (3), le tube étant entièrement contenu dans la rainure.

La géométrie relative de la rainure et du tube peut permettre soit un contact étroit entre rainure et tube, comme par exemple représenté à la figure 4, soit un contact plus limité comme représenté par exemple à la figure 3.

L'assemblage du tube (4) et de la bande d'usure (2) par fixation du tube dans la rainure (3) peut être réalisé par tout moyen connu. Cependant les deux modes préférés d'assemblage du tube et de la bande d'usure selon l'invention sont soit l'encastrage du tube dans la rainure comme représenté par exemple à la figure 4, soit le collage du tube dans la rainure soit une association des deux méthodes.

L'encastrage du tube (4) dans la rainure (3) est possible selon l'invention pour diverses sections de tubes et rainures voisines. Ainsi, on peut avoir un tube à section carrée s'encastrant dans une rainure de section voisine de manière à avoir une surface de contact très grande entre le tube, matériau "surveillant", et la bande d'usure, matériau "surveillé".

Un tube à section circulaire sera encastré dans une rainure dont une portion est semi-circulaire, comme par exemple illustré à la figure 4. Dans ce cas, un joint de colle (11) est utilisé pour solidariser le tube et la rainure.

On peut aussi assembler le tube et la rainure en utilisant un adhésif (10) afin de coller le tube dans la rainure comme illustré à la figure 3.

De préférence, l'adhésif est à durcissement par polymérisation en étuve (adhésif thermodurcissable), de manière à ce que la couche d'adhésif transmette avec la plus grande sensibilité les défauts ou contraintes du matériau "surveillé" au matériau "surveillant". Des adhésifs à base d'élastomère ou de matière thermoplastique sont utilisables selon l'invention mais ne sont pas préférés car ils propagent moins bien les contraintes que les adhésifs plus durs ou plus résilients.

Parmi les adhésifs thermodurcissables, on peut citer ceux à base de résine phénolique ou époxy.

Toutes ces techniques d'assemblage conduisent à une association très rigide de la bande d'usure et du tube détecteur et la demanderesse a observé qu'il y avait dans ce cas une bonne transmission des contraintes de la bande d'usure au tube détecteur.

En général, au moins une des extrémités du tube sera munie de moyens permettant de relier l'extrémité du tube à un dispositif de détection, l'autre extrémité étant fermée. Comme cela est déjà connu, le dispositif de détection maintient dans le tube un fluide sous pression et détecte les variations, de pression ou de débit qui résulteraient d'une fuite par suite soit de l'usure normale de la bande de frottement soit de l'apparition d'un défaut, tel qu'une fissure.

La bande de frottement (1) obtenue après assemblage du tube (4) et de la bande d'usure (2) est ensuite généralement montée et fixée sur un étrier métallique (5) en vue de son utilisation finale, par exemple sur un pantographe.

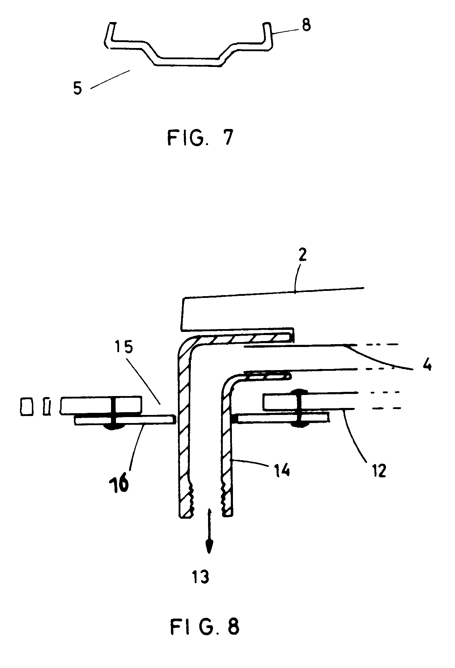

L'étrier (5) tel que représenté à la figure 2 est de type "autoporteur". On peut aussi utiliser un étrier non autoporteur qui peut avoir, en coupe tranversale, la forme représentée à la figure 7.

Le principal avantage de l'invention est, comme déjà mentionné, la grande sensibilité de détection des défauts. Bien que cette propriété ne soit pas facilement quantifiable, la demanderesse a observé que la bande d'usure de la bande de frottement selon l'invention ne subissait pas de dommage, par exemple une fissuration suite à un choc, sans que le tube soit également endommagé et fissuré. Ceci est le résultat du concept développé dans l'invention, à savoir l'utilisation de deux matériaux, un "surveillé" et un "surveillant" de propriétés voisines, de résistance mécanique et de résilience voisines notamment et leur association par encastrage ou à l'aide d'adhésif n'atténuant pas sensiblement la propagation de l'endommagement de la bande d'usure (2) vers le tube détecteur (4).

Les autres avantages de la bande de frottement selon l'invention résultent également de la similitude de comportement des matériaux "surveillant" et "surveillé" et sont les suivants :

- bonne tenue de la bande de frottement aux agressions d'origine thermique : en service ou pendant le cycle de fabrication de la bande, des températures pouvant aller de - 30 à + 200°C sont fréquentes. Ces variations de température sont sans influence néfaste sur la bande de frottement selon l'invention dont les deux constituants principaux, la bande d'usure et le tube détecteur ont sensiblement les mêmes caractéristiques de dilatation.
- bonne tenue dans le temps et bonne tenue à la fatigue compte tenu de la nature carbonée des matériaux, en outre : l'évolution des caratéristiques est la même au cours du temps pour le matériau "surveillant" et le matériau "surveillé".
- bonne tenue aux agressions chimiques ou photochimiques (rayonnement solaire UV) des matériaux utilisés dans l'invention.
- bonne tenue à la corrosion, notamment à la corrosion électrochimique en présence d'humidité et au passage du courant électrique. Toutes ces propriétés et tous ces avantages montrent l'intérêt de l'invention pour contribuer à assurer la sécurité, la régularité et la fiabilité des moyens de transport en commun et notamment celle des trains à grande vitesse.

DESCRIPTION DES FIGURES :

Les figures 1 à 5 correspondent à l'invention, la figure 6 correspond à l'art antérieur.

La figure 1 représente une section transversale d'une bande de frottement.

La figure 2 représente une section transversale d'un étrier (5) adapté à la bande de frottement de la figure 1.

La figure 3 représente une section transversale de la bande de frottement de la figure 1 montée sur l'étrier de la figure 2.

La figure 4 représente une section transversale d'une bande de frottement avec un tube encastré maintenu, par un joint de colle (11), au fond de la rainure à section en partie semi-circulaire. Le fil caténaire (7) est également représenté.

La figure 5 représente une section transversale et une section longitudinale d'une bande d'usure qui montre la surface d'usure à 3 pentes de la bande d'usure, avec section du fil caténaire (7).

La figure 6 représente une section transversale d'une bande de frottement et son étrier selon l'art antérieur (GB 1374972 - figure 2 A).

La figure 7 représente un étrier non autoporteur utilisable selon l'invention.

La figure 8 représente en section longitudinale un exemple de raccordement du tube (4), solidaire de la bande d'usure (2), au dispositif de détection (13), non représenté, à l'aide d'un embout en forme de coude (14).

EXEMPLE

On a fabriqué d'abord une bande d'usure en carbone amorphe (référence AR 129 de la Société Le Carbone Lorraine) à partir de mélanges de poudres de coke, de graphite avec du brai. On a comprimé ce mélange pour former une "balle" cylindrique de 400 mm de Ø et 1000 mm de hauteur. On a filé cette "balle" et obtenu un profilé ayant sensiblement la plus grande section de la bande d'usure finale, on l'a coupé en bâtons d'égale longueur que l'on a cuits dans un four à une température de l'ordre de 1300°C. Après cuisson, on a coupé le profilé à la longueur de la bande d'usure finale (696 mm) et on l'a rainuré par usinage. Il est également possible d'obtenir une rainure par filage mais dans ce cas, il y a des risques d'éclatement du matériau à la cuisson à cause des distorsions introduites par la rainure. On a ensuite cuivré et étamé la partie du profilé destiné à être en contact avec les machoires (8) de l'étrier, cette partie correspondant à la zone de retraits latéraux (6) ayant été cuivrée et étamée en masquant la partie non destinée à être cuivrée et étamée.

On a ensuite fabriqué un tube étanche en carbone :

On a filé une balle constituée de poudres et liants voisins en nature de ceux utilisés pour la bande d'usure mais, en ce qui concerne les poudres, de granulométrie inférieure afin d'obtenir un tube final de grande étanchéité. On a obtenu un tube profilé qui a été coupé à la longueur de 1500 mm en vue de la cuisson. On a cuit le tube profilé vers 1300°C.

Afin d'assurer une grande étanchéité, on a imprégné le tube profilé avec une résine thermodurcissable, par exemple une résine phénolique, que l'on a polymérisée à 200°C pendant quelques heures (le matériau obtenu correspond à la référence JP 445 de la Société Le Carbone Lorraine).

On a ensuite raccordé chaque extrémité du tube à un embout coudé en aluminium (14) par encastrage et collage de l'extrémité du tube dans un des orifices de l'embout coudé, l'autre orifice de l'embout coudé étant fileté intérieurement en vue du raccordement au système de détection (13) et présentant extérieurement une section carrée de manière à permettre un blocage en rotation de l'embout, une fois celui-ci positionné sur l'étrier. On a réalisé un premier test d'étanchéité sous 1,5 MPa : il n'y a pas apparition de bulles sous cette pression.

On a ensuite assemblé le tube muni de ses embouts coudés et la bande d'usure en introduisant un adhésif constitué d'une résine phénolique chargée de poudre de graphite dans la rainure de la bande d'usure et en appliquant ensuite le tube de manière à ce que le tube soit au fond de la rainure en contact avec la bande d'usure et que les deux embouts coudés émergent perpendiculairement à la base de la bande d'usure. On a polymérisé la résine phénolique vers 80°C.

On a ainsi obtenu une bande de frottement comprenant une bande d'usure solidaire d'un tube détecteur muni d'embouts permettant la jonction étanche à un système de détection de fuites.

On a ensuite assemblé la bande de frottement et l'étrier par encliquetage de la bande de frottement dans l'étrier grâce à l'élasticité des bords de l'étrier. Au préalable, on a découpé des orifices (15) aux extrémités du plateau (12) de l'étrier (5), suffisamment larges pour permettre le passage des embouts (14), filetés intérieurement et à section extérieure carrée. Sur chaque embout à section carrée on a fait glisser une plaque (16) à trou carré ayant sensiblement la section extérieure carrée de l'embout avec un léger jeu permettant le glissement et on l'a fixée à l'étrier, par exemple à l'aide de rivets, de manière à bloquer en rotation l'embout (14) fileté et à permettre un raccordement étanche, par vissage, au dispositif de détection (13).

On a ensuite réalisé une brasure de la bande de frottement et de l'étrier qui a été étamé préalablement à son assemblage avec la bande de frottement.

On a ensuite usiné la partie supérieure de la bande de frottement de manière à avoir une surface de frottement à 3 plans, avec un plan central parallèle à la base de la bande de frottement et deux plans latéraux légèrement inclinés.

On a enfin paraffiné la bande de frottement afin de la rendre imperméable à l'eau et vérifié de nouveau et dans les mêmes conditions que précédemment l'étanchéité du tube.

Propriétés des matériaux utilisés :

**Propriétés des matériaux utilisés :**

|                          | Bande AR 129 | Tube ref. JP 445 |
|--------------------------|--------------|------------------|
| Résistance à la flexion  | $370 \ daN/cm^2$ | $320 \ daN/cm^2$ |
| Durete Shore             | 85           | 80               |
| Densité                  | 1,7          | 1,9              |
| Résistance thermique     | très bonne tenue | très bonne tenue |
| Résistance aux UV        | "          "   | "            " |
| Dilatation               | identique dans les deux cas | |

Tests réalisés sur la bande de frottement

Test de tenue à la pression : la pression d'utilisation étant de 1 MPa, la pression d'épreuve est de 1,5 MPa (test classique d'épreuve hydraulique) pendant un temps de 1 à 6 heures. Au cours de ce test, aucune rupture ou perte de pression n'ont été constatées même avec des cycles thermiques de - 30°C à + 200°C, domaine de température à laquelle peut être soumise la bande de frottement en cours de fonctionnement.

Test de sensibilité de la détection des avaries : on soumet une bande d'usure munie de son tube détecteur à un test de tenue aux chocs (masse lachée d'une certaine hauteur contre la bande d'usure - type mouton de Charpy). On a observé qu'il y a simultanéité entre l'apparition de la fissuration de la bande d'usure et la détection du défaut.

Test de tenue thermique : la bande de frottement est soumise à 100 cycles de température allant de - 30°C à + 200°C. On n'a pas observé de modification des performances après ces 100 cycles.

Test de dépassement de limite d'usure : sur un banc d'essai, on a placé une bande de frottement et simulé l'exploitation (vitesse, force d'appui, balayage du fil caténaire). On a observé que le tube détecteur n'altère en rien les performances de captage et que, lorsque le fil caténaire arrive au contact du tube et le perce, le tube commence à fuir et donc la détection a lieu sans qu'il y ait ni écrasement ni rupture du tube, ni éclatement même partiel de la bande d'usure. La détection a donc bien lieu avant tout endommagement du fil caténaire ou de l'étrier.

Test de tenue à la fatigue : en fonctionnement normal, la bande de frottement peut être soumise à des flexions, principalement selon un axe vertical. On a soumis la bande de frottement à une flexion alternée en appliquant un effort alternatif au centre de la bande dont les deux extrémités reposent sur deux appuis. La flexion avait une flèche d'amplitude allant de 0.5 à 1 mm. On a observé l'apparition et la propagation de fissure (détectée par le tube) soit avec une flèche d'amplitude supérieure à 1 mm soit au-delà de $10^6$ cycles. Ce test montre la bonne tenue à la fatigue de la bande de frottement et confirme la sensibilité de détection des avaries.

Un essai comparatif réalisé à partir d'une même bande d'usure mais en utilisant un tube en caoutchouc silicone collé avec un adhésif de même nature chimique comme dans l'art antérieur (GB 1 374 972) a confirmé les nombreux avantages de l'invention et en particulier la sensibilité de détection des avaries.

**Revendications**

1. Bande de frottement (1) servant au transfert d'énergie électrique sur matériel roulant, constituée d'une bande d'usure (2), en matériau conducteur électrique à base de carbone, comportant un dispositif détecteur d'avaries de la bande d'usure avec, sur la face de la bande d'usure (2) en contact avec un étrier (5) servant de support, une rainure (3) sur sensiblement toute la longueur de la bande d'usure (2) dans laquelle est placé un tube (4) étanche rendu solidaire avec ladite bande d'usure (2) par encastrement et/ou par collage et contenant un fluide sous pression servant de détecteur et en communication avec une autre partie dudit dispositif détecteur, ladite bande de frottement étant caractérisée en ce que le matériau constituant le tube (4) présente des caractéristiques mécaniques de résistance mécanique et de résilience, et thermo-mécaniques voisines de celles du matériau constituant la bande d'usure (2) et en ce que la profondeur (9) de la rainure (3) est supérieure à la hauteur de la machoire (8) de l'étrier (5) afin que le tube (4) détecte à temps l'usure de la bande d'usure (2).

2. Bande de frottement selon la revendication 1 dans laquelle le tube (4) est en matériau carboné.

3. Bande de frottement selon la revendication 2 dans laquelle le matériau carboné constituant le tube (4) a une résistance à l'usure au plus égale à celle du matériau carboné constituant la bande d'usure (2).

4. Bande de frottement selon une quelconque des revendications 1 à 3 dans laquelle ledit moyen pour rendre solidaire la bande d'usure (2) et le tube (4) est un adhésif à base de résine thermodurcissable.

5. Bande de frottement selon la revendication 4 dans laquelle l'adhésif à base de résine thermodurcissable contient une résine choisie parmi les résines phénoliques, époxy.

6. Bande de frottement selon une quelconque des revendications 1 à 3 dans laquelle le dit moyen pour rendre solidaire la bande d'usure (2) et le tube (4) est l'encastrage du tube dans la rainure (3) de la bande d'usure.

7. Bande de frottement selon la revendication 6 dans laquelle le tube (4) est cylindrique, dans laquelle la rainure (2) de la bande d'usure comporte une portion semi-cylindrique, dans laquelle s'encastre le tube et dans laquelle le tube est maintenu encastré par un joint d'adhésif.

8. Bande de frottement selon une quelconque des revendications 1 à 7 dans laquelle la bande d'usure (4) est constituée de plusieurs parties assemblées par tout moyen connu.

9. Procédé de fabrication d'une bande de frottement (1) en matériau carboné, suivant l'une des revendications 1 à 8, solidaire d'un étrier (5), comportant une bande d'usure (2) munie d'une rainure (3) contenant un tube étanche (4) connecté à un système de détection de fuites (13) afin de détecter des avaries de la bande de frottement, caractérisé en ce que :

a- on fabrique une bande d'usure (2) en matériau carboné présentant une rainure (3) à sa partie inférieure de profondeur au moins égale à la hauteur de la machoire (8) de l'étrier (5), et de longueur voisine de celle de la bande d'usure

b- on fabrique un tube (4) en matériau carboné, étanche à une pression d'au moins 1 MPa de dimensions voisines de celles de la rainure et on fixe à au moins une de ses extrémités un embout métallique (14) permettant le raccordement à un système de détection des fuites (13)

c- on fabrique une bande de frottement (1) en rendant solidaires la bande d'usure (2) et le tube (4) qui est introduit dans la rainure (3) de la bande d'usure (2), le/les embouts (14), eventuellement filetés à une extrémité, étant orienté(s) de manière à permettre un raccordement ultérieur au système de détection de fuites (13)

d- on rend solidaires la bande de frottement (1) et l'étrier (5) en encliquetant la bande de frottement dans l'étrier grâce à la flexibilité des machoires (8) de l'étrier et en soudant tout ou partie des machoires (8) avec tout ou partie de la partie (6) de la bande de frottement qui lui fait face, cette partie (6), et éventuellement l'étrier (5), ayant été préalablement traitée pour permettre la réalisation de la brasure.

e- on met en oeuvre des moyens pour que l'embout (14) puisse être raccordé de manière étanche au dispositif de détection (13) sans exercer de contrainte mécanique significative sur le tube (4).

10. Procédé selon la revendication 9 dans lequel on rend solidaires la bande d'usure (2) et le tube (4) en utilisant un adhésif thermodurcissable, éventuellement chargé de poudre de graphite.

11. Procédé selon une quelconque des revendications 9 et 10 dans lequel les moyens pour que l'embout (14) puisse être raccordé de manière étanche au dispositif de détection sans exercer de contrainte mécanique sur le tube (4), comprennent l'utilisation d'un embout (14) à section non circulaire et d'une plaque (16), munie d'un orifice ayant sensiblement la même section non circulaire au travers duquel passe l'embout (14), la plaque (16) étant fixée à la base (12) de l'étrier (5) de manière à bloquer la rotation de l'embout (14).

**Claims**

1. A friction strip (1) used for the transfer of electrical energy to rolling stock, constituted by a wearing strip (2) made of carbon-based electrically conductive material, comprising a device for detecting damage to the wearing strip, with, on the surface of the wearing strip (2) in contract with a stirrup member (5) which acts as a support, a groove (3) over substantially the entire length of the wearing strip (2) in which a leak-proof tube (4) is placed which is made integral with said wearing strip (2) by flush fitment and/or by sticking aid containing a pressurised fluid which acts as a detector and which communicates with another part of said detector device, said friction strip being characterised in that the material of which the tube (4) is made has mechanical characteristics of mechanical strength and resilience and thermo-mechanical characteristics close to those of the material of which the wearing strip (2) is made, and in that the depth (9) of the groove (3) is greater than the height of the jaw (8) of the stirrup member (5), in order that the tube (4) timely detects wearing of the wearing strip.

2. A friction strip according to Claim 1, wherein the tube (4) is made of carbon-based material.

3. A friction strip according to Claim 2, wherein the carbon-based material of which the tube (4) is made has a resistance to wear which is at the most equal to that of the carbon-based material of which the wearing strip (2) is made.

4. A friction strip according to any one of Claims 1 to 3, wherein said means for rendering the wearing strip (2) integral with the tube (4) is a thermo-hardening resin based adhesive.

5. A friction strip according to Claim 4, wherein the thermo-hardening resin based adhesive contains a resin selected from the phenolic resins and epoxy resins.

6. A friction strip according to any one of Claims 1 to 3, wherein said means for making the wearing strip (2) integral with the tube (4) is flush fitment of the tube in the groove (3) in the wearing strip.

7. A friction strip according to Claim 6, wherein the tube (4) is cylindrical, wherein tie groove (2) of the wearing strip comprises a semi-cylindrical portion in which the tube is flush fitted and in which the tube is held flush fitted by an adhesive seal.

8. A friction strip according to any one of Claims 1 to 7, wherein the wearing strip (4) is constituted by a plurality of parts assembled by any known means.

9. A method of producing a friction strip (1) of carbon-based material according to one of Claims 1 to 8, which is integrally formed with a stirrup member (5), comprising a wearing strip (2) provided with a groove (3) containing a leak-proof tube (4) connected to a leakage detection system (13) in order to detect damage to the friction strip, characterised in that:
   a) a wearing strip (2) of carbon-based material is produced which has a groove (3) in its bottom part, the depth of the groove being at least equal to the height of the jaw (8) of the stirrup member (5), and its length being close to that of the wearing strip;
   b) a tube (4) of carbon-based material is produced which is leak-proof to a pressure of at least 1 MPa and its dimensions being close to those of the groove, and to at least one of its ends is fixed a metal socket (14) to permit connection to a leakage detection system (13);
   c) a friction strip (1) is produced by rendering the wearing strip (2) integral with the tube (4) which is introduced into the groove (3) of the wearing strip (2), the socket(s) (14) which may be screwthreaded at one end being oriented in such a way as to permit subsequent connection to the leakage detection system (13);
   d) the friction strip (1) and the stirrup member (5) are made integral by snap-fitting the friction strip in the stirrup member by virtue of the flexibility of the jaws (8) of the stirrup member and by welding all or part of the jaws (8) to all or part of the part (6) of the friction strip opposite, this part (6) and possibly the stirrup member (5) having been treated beforehand in such a way as to enable such soldering to be carried out;

e) means are employed whereby tie socket (14) can be connected in leak-proof manner to the detection device (13) without any significant mechanical stress being exerted on the tube (4).

10. A method according to Claim 9, wherein the wearing strip (2) and the tube (4) are made integral by using a thermo-hardening adhesive which may be charged with graphite powder.

11. A process according to any one of Claims 9 and 10, wherein the means enabling the socket (14) to be connected in leak-proof manner to the detection device without any mechanical stress being exerted on the tube (4) comprise the use of a socket (14) of non-circular section and a plate (16) which is provided with an orifice of substantially the same non-circular section through which the socket (14) passes, the plate (16) being fixed to the base (12) of the stirrup member (5) in such a way as to arrest rotational movement of the socket (14).

## Patentansprüche

1. Schleifleiste (1) zur Übertragung von elektrischer Energie auf rollendes Material, die aus einer Verschleißleiste (2) aus elektrisch leitendem Material auf Kohlebasis besteht, und die eine Vorrichtung zur Erkennung vom Fehlern der Verschleißleiste aufweist, welche auf der Seite der Verschleißleiste (2), die sich mit einem als Halter dienenden Bügel (5) in Kontakt befindet, über die gesamte Länge der Verschleißleiste (2) eine Rille (3) aufweist, in der ein dichtes Rohr (4) angeordnet und mit der genannten Verschleißleiste (2) durch Einsetzen und/oder Kleben fest verbunden ist, welches ein unter Druck stehendes Fluid enthält, als Sensor dient und mit einem weiteren Teil der genannten Erkennungsvorrichtung in Verbindung steht, wobei die genannte Schleifleiste dadurch gekennzeichnet ist, daß das Material, aus dem das Rohr (4) besteht, mechanische Eigenschaften hinsichtlich mechanischer Festigkeit und Elastizität sowie thermomechanische Merkmale aufweist, die ähnlich sind wie die des Materials der Verschleißleiste (2), und daß die Tiefe (9) der Rille (3) größer bemessen ist als die Höhe der Backe (8) des Bügels (5), damit das Rohr (4) rechtzeitig den Verschleiß der Verschleißleiste (2) erkennt.

2. Schleifleiste nach Anspruch 1, wobei das Rohr (4) aus kohlenstoffhaltigem Material besteht.

3. Schleifleiste nach Anspruch 1, wobei das kohlenstoffhaltige Material, aus dem das Rohr (4) besteht, eine verschleißfestigkeit hat, die höchstens gleich groß ist wie die des kohlenstoffhaltigen Materials, aus dem die Verschleißleiste (2) besteht.

4. Schleifleiste nach einem der Ansprüche 1 bis 3, wobei das genannte Mittel zur festen Verbindung der Verschleißleiste (2) und des Rohrs (4) aus einem Kleber auf Basis von wärmeaushärtendem Harz besteht.

5. Schleifleiste nach Anspruch 4, wobei der Kleber auf Basis von wärmeaushärtendem Harz ein unter den Phenol- und Epoxydharzen ausgewähltes Harz enthält.

6. Schleifleiste nach einem der Ansprüche 1 bis 3, wobei das genannte Mittel zur festen Verbindung der Verschleißleiste (2) und des Rohrs (4) aus dem Einsetzen des Rohrs in die Rille (3) besteht.

7. Schleifleiste nach Anspruch 6, wobei das Rohr (4) rollenförmig ist, wobei die Rille (3) der Verschleißleiste (2) einen halbzylindrischen Abschnitt aufweist, in den sich das Rohr einfügt und in dem das Rohr durch eine Klebverbindung eingesetzt gehalten wird.

8. Schleifleiste nach einem der Ansprüche 1 bis 7, wobei die Verschleißleiste (2) aus mehreren Teilen besteht, die durch ein beliebiges bekanntes Mittel zusammengesetzt werden.

9. Verfahren zur Herstellung einer Schleifleiste (1) aus kohlenstoffhaltigem Material nach einem der Ansprüche 1 bis 8, die fest mit einem Bügel (5) verbunden ist und aus einer Verschleißleiste (2) mit einer Rille (3) besteht, die ein dichtes Rohr (4) enthält, das mit einem System zur Erkennung von Lecks (13) verbunden ist, um Fehler der Schleifleiste zu erkennen,

dadurch gekennzeichnet, daß

a) eine Verschleißleiste (2) aus kohlenstoffhältigem Material hergestellt wird, die in ihrem unteren Teil eine Rille (3) aufweist, deren Tiefe mindestens gleich der Höhe der Backe (8) des Bügels (5) ist, und deren Länge ähnlich wie die der Verschleißleiste (2) bemessen ist,

b) ein Rohr (4) aus kohlenstoffhaltigem Material, das bei einem Druck von mindestens 1 MPa dicht ist, mit ähnlichen Abmessungen wie die der Rille hergestellt wird, und an mindestens einem von dessen Enden ein metallisches Ansatzstück (14) befestigt wird, durch das der Anschluß an ein System zu Erkennung von Lecks (13) erfolgen kann,

c) eine Schleifleiste (1) hergestellt wird, indem die Verschleißleiste (2) mit dem Rohr (4), das in die Rille (3) der Verschleißleiste (2) eingefügt wird, fest verbunden wird, wobei das/die Ansatzstück(e) (14), die möglicherweise an einem Ende mit einem Gewinde versehen ist/sind, so ausgerichtet wird/worden, daß ein späterer Anschluß an das System zu Erkennung von Lecks (13) erfolgen kann,

d) die Schleifleiste (1) und der Bügel (5) fest verbunden werden, indem die Schleifleiste mittels der Elastizität der Backen (8) des Bügels an dem Bügel eingeschnappt wird und indem die Backen (8) insgesamt oder zum Teil mit dem diesem gegenüberbefindlichen ganzen Teil (6) der Schleifleiste oder einem Teil von diesem verschweißt werden, wobei dieses Teil (6) und eventuell der Bügel (5) zuvor behandelt wurden, um die Durchführung des Lötens zu ermöglichen,

e) Mittel eingesetst werden, um das Ansatzstück (14) in dichter Weise mit der Erkennungsvorrichtung (13) verbinden zu können, ohne eine bedeutsame mechanische Belastung auf das Rohr (4) auszuüben.

10. Verfahren nach Anspruch 9, wobei die Verschleißleiste (2) mit dem Rohr (4) fest verbunden wird, indem ein wärmeaushärtender Kleber, der eventuell Graphitpulver enthält, verwendet wird.

11. Verfahren nach einem der Ansprüche 9 und 10, wobei die Mittel, um das Ansatzstück (14) in dichter weise mit der Erkennungsvorrichtung verbinden zu können, ohne eine mechanische Belastung auf das Rohr (4) auszuüben, die Verwendung eines Ansatzstücks (14) mit einem nicht kreisförmigen Querschnitt und einer Platte (16) mit einer Öffnung mit im wesentlichen dem gleichen nicht kreisförmigen Querschnitt, durch die das Ansatzstück (14) paßt, umfassen, wobei die Platte (16) an der Basis (12) des Bügels (5) dergestalt befestigt ist, daß sie die Drehbewegung des Ansatzstücks (14) blockiert.

FIG. 1

FIG. 2

FIG. 3

FIG. 4

FIG. 5

FIG. 6

13

FIG. 7

FI G. 8